# DEMANDE DE BREVET EUROPEEN

(11) **EP 2 876 004 A1**
(43) Date de publication de la demande: **27.05.2015**
(21) Numéro de dépôt: 14193196.4
(22) Date de dépôt: 14.11.2014
(51) Int. Cl.: B60S 1/38, B60S 1/52, B60S 1/48

(54) **Interface hydraulique chauffante pour un système d'approvisionnement et/ou de distribution en liquide lave-glace de vehicule automobile**

(30) Priorité: 21.11.2013 FR 1361479
(71) Demandeur: Valeo Systèmes d'Essuyage, 78321 Le Mesnil Saint Denis (FR)
(72) Inventeur: Jarasson, Jean-Michel, 78321 LE MESNIL SAINT DENIS (FR); Izabel, Vincent, 91380 CHILLY MAZARIN (FR); Caillot, Gérald, 78720 CERNAY LA VILLE (FR)
(74) Mandataire: Callu Danseux, Violaine

(57) **Abrégé**

L'invention concerne une interface hydraulique (7) destinée à être installée entre un tube d'alimentation (6) en liquide lave-glace et un connecteur (4) d'un dispositif d'essuyage d'une vitre d'un véhicule automobile, comprenant un corps (9) définissant au moins un canal (8) de passage du liquide lave-glace, et au moins un conducteur chauffant électrique (13) disposé pour réchauffer ledit liquide lave-glace, ledit corps (9) étant configuré pour solidariser ledit conducteur (13) à lui-même par assemblage de différentes parties dudit corps et/ou par assemblage à des formes issues de matière dudit corps.

## Description

Le secteur technique de la présente invention est celui des systèmes d'approvisionnement et/ou de distribution en liquide lave-glace pour véhicule automobile, et plus particulièrement des interfaces hydrauliques installées entre un tube d'alimentation du liquide lave-glace et un connecteur d'un dispositif d'essuyage des vitres du véhicule.

Les automobiles sont couramment équipées d'installation d'essuyage et de système de lavage pour assurer un essuyage et un lavage du pare-brise et éviter que la vision qu'a le conducteur de son environnement ne soit perturbée. Les installations d'essuyage comprennent des bras effectuant un mouvement de va-et-vient angulaire au bout desquels sont installés des balais allongés, porteurs eux-mêmes de lames racleuses réalisées en une matière élastique. Les lames frottent contre le pare-brise et évacuent l'eau en l'amenant en dehors du champ de vision du conducteur.

Les systèmes de lavage comprennent un dispositif d'alimentation en liquide lave-glace qui est acheminé depuis un réservoir situé dans le véhicule et qui est projeté en direction du pare-brise par des gicleurs situés généralement sur le capot, sur la grille de baie de pare-brise ou, dans une version plus récente, sur les balais des essuie-glaces, ceci en particulier pour les balais de type plat ou « flat blade » en anglais, c'est-à-dire, pour les balais présentant par eux-mêmes un ceintrage leur permettant d'être montés sur les bras sans l'intermédiaire d'étriers ou palonniers.

Pour certains types de système d'essuyage, le liquide lave glace est ainsi acheminé depuis le réservoir et par l'intermédiaire d'une pompe jusqu'à une ou des rampe(s) de projection de liquide non visible(s) et répartie(s) le long du balai. Chaque rampe s'étend alors selon un axe longitudinal définissant la longueur du balai d'essuyage. Un ou des tube(s) d'alimentation en liquide lave-glace longe(nt) le bras jusqu'à un connecteur permettant d'établir une liaison articulée entre le bras et le balai. Le tube d'alimentation peut comprendre une ou plusieurs canalisation(s) de transport de liquide. Le connecteur comporte ainsi des orifices aptes à recevoir, par une liaison étanche, un élément de raccordement des canalisations sur le connecteur.

Lorsque la température du liquide lave-glace est trop basse, par exemple en-dessous de 5°C, on chauffe le liquide lave-glace. Pour cela, un dispositif de chauffage situé au niveau du tube d'alimentation réchauffe le liquide lave-glace prélevé dans le réservoir au moment où l'on actionne la commande du lave-glace, généralement par le levier de commande placé à côté du volant et contrôlant entre autre l'actionnement des essuie-glaces.

L'élément de raccordement installé entre la canalisation et le connecteur n'est pas chauffé. Il est donc susceptible de former une zone froide, où le liquide lave-glace gèle. Cette situation est gênante car ce gel, en des endroits discrets et difficiles d'accès du système d'approvisionnement et/ou de distribution de liquide lave-glace, peut rendre la fonction de lavage totalement indisponible, bien que le reste du système soit chauffé.

Le document WO2011/032679 propose une solution à ce problème en installant un moyen de chauffage électrique dans l'élément de raccordement. Le moyen de chauffage est noyé dans l'élément de raccordement, ce qui complique la fabrication de ce dernier.

L'invention se propose d'améliorer la situation et a donc pour objet en ce sens une interface hydraulique appartenant à un système d'alimentation en liquide lave-glace d'un dispositif d'essuyage d'une vitre d'un véhicule automobile, ladite interface comprenant un corps définissant au moins un canal de passage du liquide lave-glace, et au moins un conducteur chauffant électrique disposé pour réchauffer ledit liquide lave-glace, ledit corps étant configuré pour solidariser ledit conducteur à lui-même par assemblage de différentes parties dudit corps et/ou par assemblage à des formes issues de matière dudit corps.

Autrement dit, le corps est préalablement formé en une ou plusieurs parties puis le ou les conducteurs sont assemblés sur ledit corps auquel ils sont retenus par les formes prévues sur la ou lesdites parties et/ou assemblage desdites parties. Une telle solution permet d'éviter un surmoulage ainsi que tout moyen ou matière rapporté dans l'assemblage du conducteur chauffant électrique. La fabrication et l'assemblage de l'interface sont ainsi facilités.

Avantageusement, ledit conducteur chauffant électrique est inséré dans au moins une cavité dudit corps, laquelle est par exemple conformée pour maintenir en position le ou lesdits conducteurs chauffants électriques. Ladite cavité est ouverte à chacune des ses extrémités longitudinales pour permettre audit conducteur chauffant d'entrée et de sortir de ladite cavité.

Avantageusement, ladite cavité est ménagée avec une paroi en contact avec ledit canal par une face de la paroi et avec le ou lesdits conducteurs chauffants électriques par une face opposée. Ainsi, le transfert de chaleur à partir du ou des conducteurs chauffants électriques est réalisé au plus près du liquide lave-glace.

Avantageusement, lesdits conducteurs chauffants électriques sont superposés dans ladite cavité. Ainsi, la surface d'échange entre le canal et les conducteurs chauffants électriques est augmentée, pour un encombrement réduit.

Ladite paroi est de préférence plane définissant un méplat sur sa face côté canal. La face opposée, côté cavité, est plane, parallèle au méplat. Cette disposition contribue à diminuer aussi l'encombrement dimensionnel de l'interface, notamment en largeur, c'est-à-dire transversalement au canal. En outre, cette configuration est favorable à un bon transfert thermique de ladite paroi.

Ledit corps, y compris ladite paroi, pourra être fait d'une seule matière. Ce corps est avantageusement issu de moulage de matière avec ledit canal.

Ladite paroi est avantageusement dans un matériau thermo conducteur, ce qui améliore notablement le transfert thermique par ladite paroi. Pris en combinaison avec ce qui précède, on dispose d'une interface dont l'ensemble du corps est en matériau plastique thermo conducteur, ce qui assure un transfert global de la chaleur du conducteur chauffant électrique au liquide lave-glace passant dans ledit canal.

Ladite cavité peut encore contenir une matière thermo conductrice, par exemple une résine ou pâte thermo conductrice, en contact avec le conducteur chauffant électrique et ladite paroi, de préférence remplissant ladite cavité. Ces caractéristiques favorisent un transfert thermique global du conducteur chauffant au liquide lave-glace dans le canal, sans nécessairement que ladite matière thermo conductrice participe à la fixation du ou des conducteurs chauffants sur le corps.

Ladite cavité est de préférence au moins une rainure, formée dans ledit corps. Une telle rainure permet de loger le conducteur chauffant électrique dans un espace restreint orienté le long du canal de passage de liquide lave-glace, ce qui bénéficie à l'encombrement dimensionnel et à la performance du transfert thermique de l'interface.

Avantageusement, ladite rainure est configurée pour maintenir ledit conducteur chauffant électrique à l'intérieur d'elle-même, par exemple en étant apte à pincer ou coincer ledit conducteur chauffant électrique pour permettre un assemblage du conducteur chauffant dans la rainure. Ledit pincement réalise une jonction de contact entre le conducteur chauffant et ladite paroi qui est favorable au transfert thermique du conducteur chauffant au liquide lave-glace. De façon alternative ou complémentaire, ladite rainure peut être conformée pour permettre une introduction du conducteur chauffant électrique par simple pression à l'intérieur d'elle-même, tel un clippage.

Avantageusement, ladite rainure est déformée au niveau de son ouverture, notamment par chauffage, de manière à former un bourrelet emprisonnant le ou les conducteurs chauffants électriques. Ladite ouverture, en particulier ledit bourrelet, peut encore être refermée, notamment par soudure, en particulier par soudure ultrasons, ce qui emprisonne encore plus rigidement le ou les conducteurs chauffants électriques.

Ledit corps comporte avantageusement deux portions, une portion principale configurée pour être reliée au dit connecteur et une portion coudée configurée pour être reliée audit tube d'alimentation. Ladite rainure est alors avantageusement formée dans ladite portion principale, ce qui facilite l'assemblage du ou desdits conducteurs chauffants.

De manière préférentielle, l'interface hydraulique comprend deux canaux de passage de liquide lave-glace, à savoir un premier et un deuxième canal, et le ou lesdits conducteurs chauffants électriques formant au moins une boucle disposée le long du premier et deuxième canal. De préférence, ledit deuxième canal de passage de liquide lave-glace est symétrique au premier canal par rapport à un axe longitudinal de ladite portion principale du corps.

Avantageusement, les premier et deuxième canaux sont reliés par un pont du corps de l'interface, le ou les conducteurs chauffants électriques cheminant sur ledit pont.

Avantageusement, la ou lesdites rainures associée(s) à chacun des premier et deuxième canaux s'étend(ent) parallèlement l'une à l'autre, notamment le long de ladite portion principale du corps, dans ladite direction longitudinale, en particulier dans au moins une partie du pont, ce qui permet de profiter de la matière du pont entre les canaux.

De façon complémentaire ou alternative, ledit corps pourra comprendre une base et un couvercle, ledit couvercle étant fixé à ladite base en retenant le ou lesdits conducteurs chauffants électriques entre ladite base et ledit couvercle. Notamment, le ou lesdits conducteurs chauffants électriques sont pris en sandwich entre ladite base et ledit couvercle. Ledit couvercle pourra fermer la ou lesdites cavités évoquées.

Ladite interface peut notamment être destinée à être installée entre un tube d'alimentation en liquide lave-glace et un connecteur d'un dispositif d'essuyage, ladite interface comprenant une première extrémité destinée à assurer une jonction avec le connecteur et une deuxième extrémité destinée à assurer une jonction avec le tube d'alimentation. De manière connue, le connecteur est rapporté sur le balai d'essuyage et assure une transmission des efforts vers le balai, il forme avec l'adaptateur l'interface de liaison entre le bras et le balai. L'adaptateur est quant à lui une pièce intermédiaire assurant une compatibilité entre différentes formes de d'extrémité de bras et un même balai d'essuyage. L'adaptateur et le connecteur sont articulés en rotation l'un par rapport à l'autre autour d'un axe perpendiculaire au balai.

L'invention couvre aussi un système d'approvisionnement et/ou de distribution en liquide lave-glace d'une installation d'essuyage pour véhicule automobile, comprenant au moins un tube d'alimentation en liquide lave-glace, au moins un câble formant source de chauffage et une interface comprenant l'une quelconque des caractéristiques présentées ci-dessus.

De préférence, ledit câble formant source de chauffage s'étend dans le tube d'alimentation en liquide lave-glace, étant en particulier coextrudé dans ledit tube.

Avantageusement, ledit conducteur chauffant électrique disposé au niveau de l'interface forme un seul et même câble avec le câble formant source de chauffage étendu le long du tube d'alimentation en liquide lave-glace, de sorte qu'aucune connexion électrique n'est nécessaire pour relier le conducteur chauffant électrique audit câble formant source de chauffage.

L'invention concerne également un dispositif d'essuyage comprenant le système d'approvisionnement décrit ci-dessus.

D'autres caractéristiques, détails et avantages de l'invention ressortiront plus clairement à la lecture de la description donnée ci-après à titre indicatif en relation avec des dessins annexés, dans lesquels :
- la figure 1 est une vue générale, en perspective, d'un dispositif d'essuyage pour véhicule automobile comprenant une interface hydraulique selon un mode de réalisation de l'invention,
- la figure 2 est une vue de détail de la figure 1,
- la figure 3 est une vue en perspective de l'interface hydraulique du dispositif d'essuyage selon la figure 1, sans le conducteur chauffant électrique ni le tube d'alimentation en liquide lave-glace,
- la figure 4 est une vue en perspective de l'interface hydraulique précitée, à laquelle le conducteur chauffant électrique a été pré assemblé et le tube d'alimentation hydraulique a été relié,
- la figure 5 est une vue en perspective de l'interface hydraulique de la figure 4 à laquelle le conducteur chauffant électrique a été assemblé,
- la figure 6 est une vue en coupe transversale de l'interface hydraulique selon la figure 5, et
- les figures 7 et 8 montrent, en perspective, une interface hydraulique d'un dispositif d'essuyage pour véhicule automobile selon une variante de réalisation de l'invention, le corps de ladite interface étant respectivement illustré de façon assemblé et éclaté.

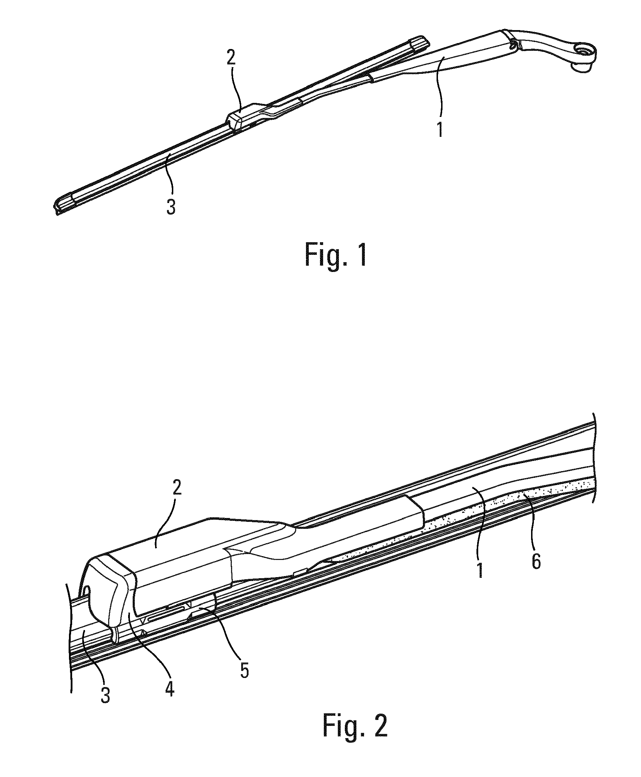

En se référant aux figures 1 et 2, on voit un dispositif d'essuyage pour une vitre d'un véhicule automobile, autrement appelé essuie-glace, composé d'un porte-balai ou bras 1 se terminant à son extrémité externe par une chape 2, qui est fixée, notamment, par sertissage sur le bras 1. De manière alternative, cette chape peut également être formée à l'extrémité du bras par déformation de cette dernière et constituer un ensemble unitaire avec le bras. Ce dernier a pour fonction, par l'intermédiaire d'un adaptateur, non-visible, et d'un connecteur 4, de supporter un balai d'essuyage 3.

Le liquide lave-glace destiné au nettoyage du pare-brise est acheminé depuis un réservoir et par l'intermédiaire d'une pompe jusqu'à une ou des rampe(s) de projection de liquide non visible(s) sur ces figures et répartie(s) le long du balai 3. Chaque rampe s'étend alors selon un axe longitudinal définissant la longueur du balai d'essuyage.

Le connecteur 4 est solidaire de la structure du balai d'essuyage 3 et assure d'une part une transmission des efforts vers le balai, et d'autre part le transport et la distribution du liquide lave-glace vers le balai d'essuyage ; alors que l'adaptateur est une pièce intermédiaire assurant une compatibilité entre les différentes formes de chape et un même balai d'essuyage. L'adaptateur et le connecteur 4 sont articulés en rotation l'un par rapport à l'autre autour d'un axe perpendiculaire au balai 3.

Un tube d'alimentation 6 en liquide lave-glace longe le bras 1 jusqu'au connecteur 4. Selon une première variante de l'invention, un tel tube d'alimentation comprend un unique canal d'alimentation en liquide lave-glace. Selon une autre variante de l'invention, le tube d'alimentation 6 comprend une pluralité de canaux, notamment deux séparés l'un de l'autre. Une telle configuration est particulièrement adaptée au cas où le dispositif d'essuyage comprend un balai d'essuyage 3 équipé de deux rampes de projection opposées qui s'étendent selon un axe longitudinal définissant la longueur du balai d'essuyage.

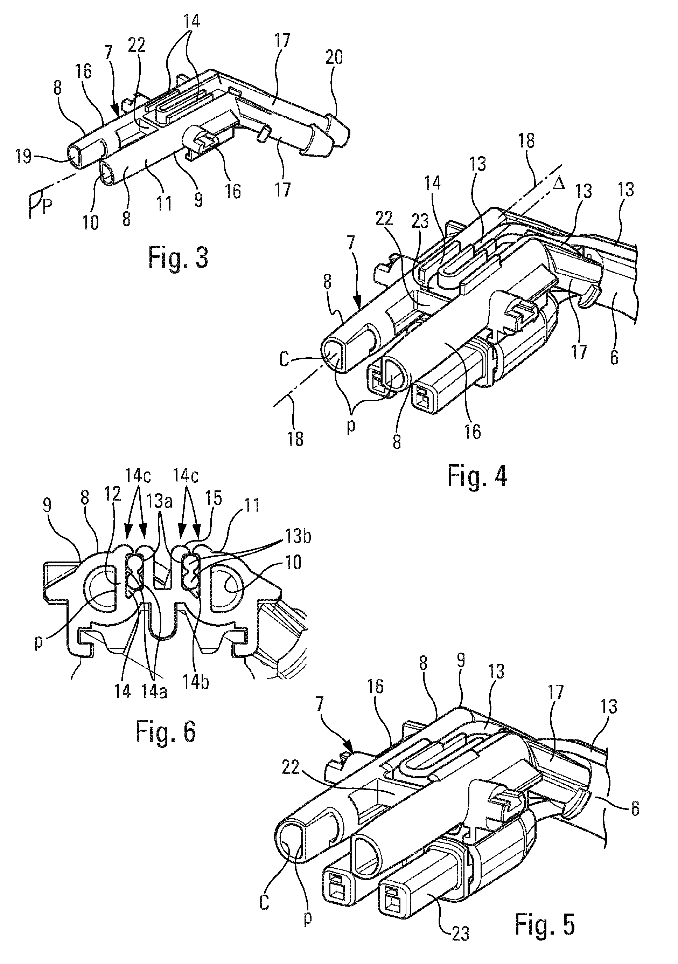

Le tube d'alimentation 6 est raccordé au moins mécaniquement et hydrauliquement au connecteur 4 par une interface hydraulique 7 selon l'invention, visible aux figures 3 et suivantes. Cette interface a pour fonction notamment de faciliter la connexion/déconnexion du connecteur 4 par rapport au tube d'alimentation, lors d'un remplacement du balai d'essuyage en raison de son usure, par exemple.

L'interface 7 est hydraulique en ce qu'elle canalise le liquide lave-glace entre le tube d'alimentation 6 et le connecteur 4. Elle comprend selon l'invention un corps 9 définissant au moins un canal 8 de passage du liquide lave-glace et au moins un conducteur chauffant électrique 13 disposé proche du canal 8 dans ledit corps 9, ledit corps 9 étant configuré pour solidariser ledit conducteur 13 sur ledit corps, par lui- même.

L'interface hydraulique 7 comprend ici deux canaux identiques 8, adjacents et parallèles de passage du liquide lave-glace. Chaque canal 8 a une forme tubulaire de section globalement circulaire. L'ensemble présente un plan de symétrie longitudinal médian P.

Chaque canal 8 est délimité par une face intérieure 10 en contact avec le liquide lave-glace, le corps 9 de l'interface hydraulique 7 comportant une face extérieure 11 en contact avec l'air environnant.

Comme déjà indiqué, l'interface hydraulique 7 comporte un ou plusieurs conducteurs chauffant électriques 13 de type fil électrique chauffant. Leur fonction est de transformer le courant électrique qui les traverse en calories à dissiper au niveau du corps 9, et notamment par exemple au niveau de chaque canal 8.

Comme illustré aux figures 3 à 6, ces conducteurs chauffants électriques 13 sont insérés dans au moins une cavité 14 dudit corps 9, par exemple formée dans la face extérieure 11 dudit corps.

De manière avantageuse, cette cavité 14 est en forme de rainure accueillant le ou les conducteurs chauffants électriques 13, notamment de section en U. Autrement dit, une telle cavité 14 est une déformation de la face extérieure 11 du corps afin de former une zone rainurée.

Dans le mode de réalisation représenté aux figures 3 à 6, lesdits conducteurs 13 sont au nombre de deux et sont disposés dans la rainure 14 de manière à être superposés entre les faces latérales 14a opposées définissant la rainure 14. L'un des conducteurs 13 est en appui sur le fond 14b de la rainure et l'autre est maintenu par un bourrelet supérieur 14c formant butée au niveau de l'ouverture 15 de la rainure.

Ici, les canaux de passage du liquide lave-glace 8 sont au nombre de deux, il est donc avantageusement prévu deux cavités 14, chacune étant située le long d'une partie d'un canal de manière à optimiser le chauffage du corps 9. Comme montré à la figure 6, lesdites rainures sont définies, par exemple, entre les deux canaux. Lesdites rainures sont définies par des nervures issues de matière du corps 9. Les faces latérales 14a de chaque rainure s'étendent parallèlement entre elles. Les deux faces latérales 14a appartenant chacune à l'une des rainures et disposées en vis-à-vis sont espacées l'une de l'autre par une paroi de fond s'étendant sensiblement perpendiculairement auxdites faces latérales 14a. Ainsi, ces deux faces latérales 14a et la paroi de fond forment un U.

Le ou lesdits conducteurs chauffants électriques pourront former une ou des boucles 13a, ici deux, passant dans chacune des rainures. Autrement dit, un premier brun de chacune des boucles passe dans une première des rainures et un second brun de la même boucle passe dans l'autre rainure.

Avantageusement, les boucles 13a de conducteur chauffant électrique sont dans un premier temps introduites dans les rainures 14, pré assemblées à ces dernières, en étant légèrement serrées par celles-ci pour leur maintien en position, notamment par leurs faces latérales 14a, comme cela est visible à la figure 4. Ces boucles 13a sont ensuite solidarisées aux rainures 14 par rabattement vers l'intérieur des bords de leur ouverture 15 pour former lesdits bourrelets 14c comme on le voit aux figures 5 et 6. Ce rabattement des bords est avantageusement effectué à chaud et/ou par ultrasons.

En variante, afin d'améliorer la tenue à l'arrachement des conducteurs chauffants, les parties supérieures de chaque paroi délimitant les cavités peuvent comprendre des excroissances, régulièrement espacées. De préférence, les parties supérieures de chaque paroi délimitant une même cavité possèdent des excroissances disposées en quinconce. Ainsi lors de l'étape d'assemblage des conducteurs chauffants 13 sur le corps 9 consistant à rabattre les bords, on obtient une meilleure tenue des fils car l'espace résultant au niveau de l'ouverture 15 est supprimé ou alors fortement réduit.

En variante, la ou lesdites cavités ou rainures peuvent comporter un couvercle de fermeture de leur ouverture, non représenté, lequel peut participer au maintien en position du conducteur chauffant dans son logement.

On notera que selon l'exemple de réalisation, la section interne des canaux peut être une combinaison d'un arc de cercle C et d'un méplat p, le méplat p étant disposé en regard du ou des conducteurs chauffants électriques 13, comme on le voit à la figure 6.

La ou lesdites rainures 14 sont ménagées avec une paroi 12 en contact avec le canal 8 par ledit méplat p, et en contact avec le ou lesdits conducteurs chauffants électriques 13 par une face externe opposée 14a. Ladite face latérale 14a des rainures est plane, parallèle au méplat p, en étant proche de ce dernier, distante par exemple de 0,3 à 3 mm de celui ci.

Le corps 9 et en particulier ladite paroi 12 de la rainure sont avantageusement dans une matière thermo conductrice, par exemple une matière plastique thermo conductrice, ce qui assure un transfert thermique du conducteur chauffant 13 au liquide lave-glace pour le réchauffer et/ou le dégeler le cas échéant.

Dans une variante de réalisation non représentée, la ou les rainures ou cavités 14 peuvent contenir une matière thermo conductrice, non représentée, en contact avec le conducteur chauffant électrique 13 et avec ladite paroi 12, cette matière pouvant aussi remplir la cavité ou rainure 14, notamment pour protéger le conducteur 13.

Chaque canal 8 comporte deux portions 16 et 17 dont l'une 16 principale s'étend dans une direction longitudinale de l'interface, illustrée par la référence 18 sur la figure 4. Lesdits conducteurs chauffants électriques 13 s'étendent le long des canaux 8, sur leurs deux portions 16 et 17. Lesdits conducteurs chauffants électriques 13 sont maintenus par ledit corps dans ladite portion 16 comme expliqué précédemment tandis qu'ils sont maintenus par leur propre rigidité le long de l'autre portion 17, de sorte qu'ils restent en position.

Autrement dit, lesdites rainures 14 bien qu'elles puissent être disposées le long des deux portions 16 et 17 du canal s'étendent ici sur une partie de la portion principale 16, seulement. Lesdits conducteurs chauffants électriques 13 s'étendent en particulier par leurs boucles 13a, par les deux brins superposés 13b desdites boucles, selon un axe longitudinal Δ qui est parallèle à la direction longitudinale 18, dans lesdites rainures 14. Lesdites rainures 14 sont ainsi droites et leur longueur est ajustée pour permettre en liaison avec leur positionnement sensiblement médian sur la portion 16 un transfert de chaleur au canal 8, qui soit suffisant pour dégeler rapidement le liquide lave-glace dans l'interface si nécessaire.

Il est à noter qu'à l'extrémité libre 19 de la portion principale 16 du canal une partie de longueur libre est ménagée pour assurer une jonction emmanchée avec le connecteur 4. Il en est de même à l'extrémité libre 20 de l'autre portion 17 pour permettre la jonction avec le tube d'alimentation 6. Cette autre portion 17 forme un angle non-nul avec la direction longitudinale 18, en étant ainsi coudée relativement à la portion principale 16. Il est à noter que la portion 17 pourrait tout aussi bien être rectiligne.

Les deux canaux 8 de passage de liquide lave-glace sont ici reliés mécaniquement l'un à l'autre par un pont 22, disposé sensiblement dans une zone médiane de chacune des portions principales 16 des canaux. Lesdites nervures définissant les rainures 14 de chacun des canaux 8 sont avantageusement formées dans une partie de l'épaisseur du pont 22 entre les canaux 8, en étant symétriques l'une de l'autre relativement au dit plan longitudinal médian P de l'interface.

Le ou les conducteurs chauffants électriques 13 pourront être issus du tube d'alimentation 6 alimentant l'interface 7.

Ainsi, le ou les conducteurs chauffants électriques 13 cheminent, depuis le tube d'alimentation 6, le long de la portion coudée 17 du premier canal, puis s'étendent sur la portion principale 16 de ce premier canal 8, puis sur le pont 22, de façon libre sur la largeur de ce dernier sur le côté du pont tourné vers les extrémités 19 des portions 16, puis le long du deuxième canal 8 pour revenir à la portion coudée 17 de ce deuxième canal et enfin revenir au tube d'alimentation 6. Ces conducteurs chauffants électriques 13 sont par exemple coextrudés dans le tube d'alimentation 6 et en particulier disposés entre les deux canaux de passage de liquide lave-glace du tube d'alimentation.

On notera tout particulièrement que les deux canaux 8 et le pont 22 forment une unique pièce, réalisée selon une opération de moulage, à partir d'un même matériau polymérique.

Par ailleurs, l'interface hydraulique 7 est ici associée à un dispositif de connexion électrique 23 au connecteur 4 disposé sous l'interface, au niveau de la face opposée à celle munie des rainures 14, comme on le voit aux figures 4 et 5. Un tel dispositif 23 permet notamment l'alimentation d'un dispositif de chauffage disposé au niveau du balai. De manière à limiter l'encombrement dans une telle configuration, lesdites rainures 14 pourront être décalées vers le haut plutôt que d'être centrées par rapport auxdits canaux.

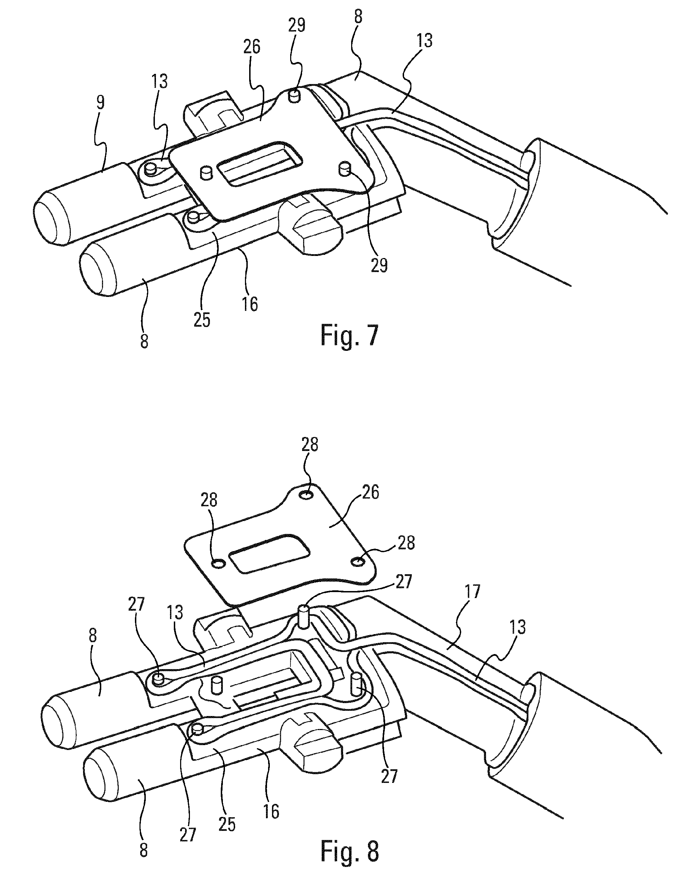

Selon la variante de réalisation des figures 7 et 8, ledit corps 9 comprend une base 25 et un couvercle 26, ledit couvercle 26 étant fixé à ladite base 25 en retenant le ou lesdits conducteurs chauffants électriques 13 entre ladite base et ledit couvercle. Notamment, le ou lesdits conducteurs chauffants électriques 13 sont pris en sandwich entre ladite base 25 et ledit couvercle 26. Comme le montre la figure 8 où le couvercle 26 est détaché de la base 25, cette dernière comprend un plat ou zone plane, ce plat recevant le ou les conducteurs chauffants électriques 13, le long de la portion principale 16 desdits canaux 8.

Ainsi, comme on le voit à la figure 8, le fil conducteur chauffant électrique 13 s'étend autour de pions 27 s'étendant sur la portion principale 16, en saillie de la surface du plat à ses coins. Le couvercle 26 est fixé au plat 25, ici par passage de certains des pions 27 dans des orifices 28 du couvercle, puis formation sur les pions d'un bourrelet 29, visible à la figure 7, formant butée de retenue du couvercle. Le bourrelet 29 est formé de préférence à chaud, par exemple par soudure ultrasons. La fixation du couvercle à la base peut encore être réalisée par collage ou clipage.

L'ensemble formé par le tube d'alimentation 6 en liquide lave-glace, le câble 13 formant source de chaleur et l'interface hydraulique 7 selon l'invention présentée ci-dessus, forme au moins une partie d'un système d'approvisionnement et/ou de distribution en liquide lave-glace d'une installation d'essuyage pour véhicule automobile.

L'invention apporte ainsi une interface hydraulique pour un système d'approvisionnement et/ou de distribution en liquide lave-glace d'une installation d'essuyage pour véhicule automobile, qui est de structure simple et permet un dégel rapide du liquide lave-glace dans ladite interface.

## Revendications

1. Interface hydraulique (7) appartenant à un système d'alimentation en liquide lave-glace d'un dispositif d'essuyage d'une vitre d'un véhicule automobile, ladite interface comprenant un corps (9) définissant au moins un canal (8) de passage du liquide lave-glace, et au moins un conducteur chauffant électrique (13) disposé pour réchauffer ledit liquide lave-glace, ledit corps (9) étant configuré pour solidariser ledit conducteur (13) à lui-même par assemblage de différentes parties dudit corps et/ou par assemblage à des formes issues de matière dudit corps.

2. Interface (7) selon la revendication 1, dans laquelle ledit conducteur chauffant électrique (13) est inséré dans au moins une cavité (14) dudit corps (9), ladite cavité étant configurée pour maintenir en position le ou lesdits conducteurs chauffants électriques (13).

3. Interface (7) selon la revendication 2, dans laquelle ladite cavité (14) est ménagée avec une paroi (12) en contact avec le canal (8) par une face (p) de la paroi et avec le ou lesdits conducteurs chauffants électriques (13) par une face opposée (14a).

4. Interface (7) selon la revendication 3, dans laquelle ladite paroi (12) est plane définissant un méplat (p) sur sa face côté canal.

5. Interface (7) selon la revendication 2, 3 ou 4, dans laquelle lesdits conducteurs chauffants électriques (13) sont superposés dans ladite cavité (14).

6. Interface (7) selon l'une quelconque des revendications 2 à 5, dans laquelle ladite cavité (14) est une rainure.

7. Interface (7) selon la revendication précédente, dans laquelle ladite rainure (14) est configurée pour maintenir ledit conducteur chauffant électrique (13) à l'intérieur d'elle-même.

8. Interface (7) selon l'une des revendications 6 et 7, dans laquelle ladite rainure (14) est configurée pour être déformée au niveau de son ouverture (15), de manière à former un bourrelet (14c) emprisonnant ledit conducteur chauffant électrique (13).

9. Interface (7) selon l'une quelconque des revendications précédentes comprenant deux canaux (8) de passage de liquide lave-glace, à savoir un premier et un deuxième canal (8), le ou lesdits conducteurs chauffants électriques (13) formant au moins une boucle (13a) disposée le long du premier et du deuxième canal (8).

10. Interface (7) selon l'une quelconque des revendications précédentes, dans laquelle ledit corps (9) comprend une base (25) et un couvercle (26), ledit couvercle (26) étant fixé à ladite base (25) en retenant le ou lesdits conducteurs chauffants électriques (13) entre ladite base et ledit couvercle.

11. Interface (7) selon la revendication 9 ou 10, dans laquelle les premier et deuxième canaux (8) sont reliés par un pont (22) appartenant au corps (9) de l'interface, le ou lesdits conducteurs chauffants électriques (13) cheminant sur ledit pont (22).

12. Interface (7) selon l'une quelconque des revendications précédentes, dans laquelle ladite interface est destinée à être installée entre un tube d'alimentation (6) en liquide lave-glace et un connecteur d'un dispositif d'essuyage, ladite interface comprenant une première extrémité (19) destinée à assurer une jonction avec le connecteur (4) et une deuxième extrémité (20) destinée à assurer une jonction avec le tube d'alimentation (6).

13. Système d'approvisionnement et/ou de distribution en liquide lave-glace d'une installation d'essuyage pour véhicule automobile, comprenant au moins un tube d'alimentation (6) en liquide lave-glace, au moins un câble (13) formant source de chauffage et une interface (7) selon l'une quelconque des revendications précédentes.
